# EUROPEAN PATENT APPLICATION

(11) **EP 4 672 162 A1**
(43) Date of publication of application: **31.12.2025**
(21) Application number: 24306029.0
(22) Date of filing: 26.06.2024
(51) Int. Cl.: G06T 19/00, G06F 3/01, G06T 15/50, G06T 19/20

(54) **SCENE DESCRIPTION-BASED DELIGHTING METHOD OF REAL-WORLD SCAN**

(71) Applicant: InterDigital CE Patent Holdings, SAS, 75017 Paris (FR)
(72) Inventor: FAIVRE D'ARCIER, Etienne, 35750 SAINT GONLAY (FR); FONTAINE, Loic, 35530 NOYAL SUR VILAINE (FR); LELIEVRE, Sylvain, 35760 MONTGERMONT (FR); HIRTZLIN, Patrice, 35830 BETTON (FR); JOUET, Pierrick, 35000 RENNES (FR)
(74) Representative: Interdigital

(57) **Abstract**

An extended reality system is proposed comprising a presentation engine and a scene understanding module configured to manage representation of the real part of the scene in a generic way. The presentation engine initializes the scene understanding module with the scene description that comprises data describing parameters to integrate the real scene and the virtual part of the extended reality scene. Some objects of the scene are delighted, and the scene description comprises corresponding parameters. The scene understanding module manages a scene understanding representation thanks to data obtained from sensors or databases and warns the presentation engine of updates of the scene understanding representation.

## Description

### 1. Technical Field

The present principles generally relate to the domain of managing the real part of an extended reality (XR) scene. Scene descriptions are central for XR applications and the relationship with the real environment, essential. In particular, the present principles relate to methods and devices for managing a representation of a real scene, in which the a real-world scan mesh is delighted based on a semantic contained in a scene description file describing its quality level.

### 2. Background

The present section is intended to introduce the reader to various aspects of art, which may be related to various aspects of the present principles that are described and/or claimed below. This discussion is believed to be helpful in providing the reader with background information to facilitate a better understanding of the various aspects of the present principles. Accordingly, it should be understood that these statements are to be read in this light, and not as admissions of prior art.

In the domain of extended Reality (XR) application, the knowledge of the real world may be required for different purposes. For example, the localization of the XR rendering device or for a seamless insertion of virtual content into the user's real environment. Such knowledge about the real world can include the location of trackables items to correctly place virtual content according to the user(s), and to the 3D representation of the surrounding environment (point cloud, mesh, semantics) to ensure proper interactions between virtual and real content (occlusion, collision, physics). Photogrammetry is a very important part in the CG industry. It makes possible for a regular camera to act as a 3D scanner to create realistic 3D assets (sometimes called "scans"), using powerful tools. In the context of XR, when those scans must be rendered on screen (so they need to be well and fully integrated), those often needs to be reworked by a 3D artist to model the object, who delights the textures and modify other aspects of the scan, before those can be used to replace elements of the real world, or to integrate elements in a virtual scene. Proprietary solutions exist.

However, each solution is specific to an engine or to an XR application. There is a lack for a solution to specify some processing model and semantic, to make a generic description of delighted objects available.

### 3. Summary

The following presents a simplified summary of the present principles to provide a basic understanding of some aspects of the present principles. This summary is not an extensive overview of the present principles. It is not intended to identify key or critical elements of the present principles. The following summary merely presents some aspects of the present principles in a simplified form as a prelude to the more detailed description provided below.

An extended reality system is proposed comprising a presentation engine and a scene understanding module configured to manage representation of the real part of the scene in a generic way. The presentation engine initializes the scene understanding module with the scene description that comprises data describing parameters to integrate the real scene and the virtual part of the extended reality scene. The scene understanding module manages a scene understanding representation thanks to data obtained from sensors or databases and warns the presentation engine of updates of the scene understanding representation. A generic API is defined for interactions between the two modules.

The present principles relate to a method for managing a scene understanding representation of a real environment of an extended reality scene comprising delighted objects. The method comprises obtaining a scene description, the scene description comprising first data describing a virtual part of the extended reality scene and second data describing parameters to integrate the real environment and the virtual part of the extended reality scene wherein the second data comprises delighting parameters. A scene understanding representation is initialized with the second data. The delighted objects in the first data are relighted according to the delighting parameters, and the first data are rendered. In an embodiment, the delighting parameters comprise a quality level, an array of texture identifiers, and an array of texture types. In a variant, for each object of the extended reality scene, the second data comprise information indicating whether the delighting parameters are present. The delighting parameters are associated with a configuration function and/or with callback functions of the second data. The quality level is a parameter indicating a low, medium or high level of quality of delighting, a slow, medium or fast level of processing speed, a low, medium or high level of processing priority, or a combination of these three kinds of quality level. A texture type belongs to a group comprising albedo, normal map and bent normal map. A texture identifier may be, for example raw pointer data, or an id which maps a texture data.

The present principles also relate to a device comprising a processor and a memory associated with the processor that is configured to implement the method above.

### 4. Brief Description of Drawings

The present disclosure will be better understood, and other specific features and advantages will emerge upon reading the following description, the description making reference to the annexed drawings wherein:
- **Figure 1** illustrates a generic module to manage a representation of the real part of an XR scene according to the present principles;
- **Figure 2** depicts an instantiation of the generic module of Figure 1 as a scene understanding module that maintains a representation of the user environment according to the present principles;
- **Figure 3** shows an example architecture of a device which may be configured to implement methods according to embodiments of the present principles;
- **Figure 4** depicts an example implementation of a sequence diagram illustrating the present principles;
- **Figure 5** shows a capture 51 of a stone and it delighted version.

### 5. Detailed description of embodiments

The present principles will be described more fully hereinafter with reference to the accompanying figures, in which examples of the present principles are shown. The present principles may, however, be embodied in many alternate forms and should not be construed as limited to the examples set forth herein. Accordingly, while the present principles are susceptible to various modifications and alternative forms, specific examples thereof are shown by way of examples in the drawings and will herein be described in detail. It should be understood, however, that there is no intent to limit the present principles to the particular forms disclosed, but on the contrary, the disclosure is to cover all modifications, equivalents, and alternatives falling within the spirit and scope of the present principles as defined by the claims.

The terminology used herein is for the purpose of describing particular examples only and is not intended to be limiting of the present principles. As used herein, the singular forms "a", "an" and "the" are intended to include the plural forms as well, unless the context clearly indicates otherwise. It will be further understood that the terms "comprises", "comprising," "includes" and/or "including" when used in this specification, specify the presence of stated features, integers, steps, operations, elements, and/or components but do not preclude the presence or addition of one or more other features, integers, steps, operations, elements, components, and/or groups thereof. Moreover, when an element is referred to as being "responsive" or "connected" to another element, it can be directly responsive or connected to the other element, or intervening elements may be present. In contrast, when an element is referred to as being "directly responsive" or "directly connected" to other element, there are no intervening elements present. As used herein the term "and/or" includes any and all combinations of one or more of the associated listed items and may be abbreviated as"/".

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element without departing from the teachings of the present principles.

Although some of the diagrams include arrows on communication paths to show a primary direction of communication, it is to be understood that communication may occur in the opposite direction to the depicted arrows.

Some examples are described with regard to block diagrams and operational flowcharts in which each block represents a circuit element, module, or portion of code which comprises one or more executable instructions for implementing the specified logical function(s). It should also be noted that in other implementations, the function(s) noted in the blocks may occur out of the order noted. For example, two blocks shown in succession may, in fact, be executed substantially concurrently or the blocks may sometimes be executed in the reverse order, depending on the functionality involved.

Reference herein to "in accordance with an example" or "in an example" means that a particular feature, structure, or characteristic described in connection with the example can be included in at least one implementation of the present principles. The appearances of the phrase in accordance with an example" or "in an example" in various places in the specification are not necessarily all referring to the same example, nor are separate or alternative examples necessarily mutually exclusive of other examples.

Reference numerals appearing in the claims are by way of illustration only and shall have no limiting effect on the scope of the claims. While not explicitly described, the present examples and variants may be employed in any combination or sub-combination.

In extended Reality (XR) application, the knowledge of the real world may be required for the localization of the XR device and for a seamless insertion of virtual content into the user's real environment. Such knowledge about the real world can include the location of trackable items (like a QR code or a specific object) and anchors in order to correctly place virtual content according to the user(s). A 3D representation of the surrounding environment (point cloud, mesh, semantics) may also be necessary to ensure proper interactions between virtual and real content (occlusion, collision, physics). This knowledge of the real word may be acquired in real time by an XR User equipment (UE), thanks to an XR runtime module that collects user environment data through sensors (e.g. cameras, microphones, 3D scanners, ...) and process them to build a real-world representation (e.g. a 3D scene graph). The UE can delegate the scene understanding processing to an edge server by sending pose information and images and/or video of the user environment to this server. The real-world representation may be captured offline and stored into a world storage library from where scanned representations of real places are available for download. A presentation engine and scene manager module (PE module) uses an XR runtime module (through an API like, for instance, OpenXR) or a world analysis module to seamlessly integrate a virtual scene into the real world. The scene understanding process is performed by the XR runtime and/or the World Analysis modules. The virtual scene may come from a scene description file (e.g. a glTF scene description file) and the PE maintains a scene representation (PE Scene) according to its own internal structure. The world knowledge may be captured and analyzed in real time (by the XR runtime and the world analysis modules) or from already captured real world representations, stored in a world storage module.

For photogrammetry in the computer graphic interfaces (CGI), proprietary solutions exist. For example, some functions are implemented in Unity. It consists of a method that allows to remove the lighting that remains in a 2D texture from a real-world capture with the following required textures inputs: base map - RGBA (original color texture to unlit), ambient occlusion - R, normal map - RGB (object space normal map) and, bent normal map - RGB (object space bent normal map). Optionally a delighting method may use other textures to improve the quality of it. For example, a position texture - RGB (texel position) may be useful to delight textures in 3D space to avoid discontinuities that can appear on UV seams during the delighting process (when no using a position texture). For example, in Unity implements a method that allows to remove the lighting that remains in a 2D texture from a real-world capture with the following required textures inputs: Base map - RGBA (original color texture to unlit), Ambient occlusion - R, Normal map - RGB (object space normal map), Bent normal map - RGB (object space bent normal map). Optionally a delighting method may use other textures to improve the quality of it. A position texture - RGB (texel position) may be useful to delight textures in 3D space to avoid discontinuities that can appear on UV seams during the delighting process (when a position texture is not used). It may also help to produce more consistent and more accurate lighting result.

In any case, the delighting is a part of the analysis of the world.

In some architectures, a world analysis module uses a world API to request world objects related to the UE location from a world asset data base. It also uses the XR Runtime API (e.g. an OpenXR API) to request sensor's data (UE environment data like camera images, position data from IMU (Inertial Measurement Unit) ...). These data are used to build in real-time a new representation of the real scene or to update the world object obtained from the world asset data base. The Presentation Engine can request representation of real objects using the XR Runtime or the World Analysis API. It can request pose information (e.g. the position of the UE or the trackables in the user environment) or user actions information (user input, gesture notification...) using the XR Runtime API (e.g. an OpenXR API). The PE uses this information to place the virtual objects at the correct location and to render the part of the virtual scene that is seen by the user. The API mentioned above may be proprietary or from open standards. For illustration purpose, open standards like OpenXR^{™} are cited as examples that provide functionalities related to scene understanding. For instance, extensions to the OpenXR API (e.g. XR_MSFT_scene_understanding and XR_FB_scene_capture) propose methods to configure and start scan processes and to request the representation of real objects.

As an example, and for illustration purpose, The XR_MSFT_scene_understanding OpenXR extension provides applications with a structured, high-level representation of the planes, meshes, and objects in the user's environment, enabling the development of spatially aware applications. The application requests computation of a scene, receiving the list of scene components observed in the environment around the user. In such an application, first an XrSceneObserverMSFT handle is created to manage the system resource of the scene understanding compute. Then, the application starts the scene computing by calling xrComputeNewSceneMSFT with XrSceneBoundsMSFT to specify the scan range and a list of XrSceneComputeFeatureMSFT features. The completion of computation is checked by polling xrGetSceneComputeStateMSFT. Once computing is completed, an XrSceneMSFT handle is created to the result by calling xrCreateSceneMSFT. Properties of scene components are obtained by using xrGetSceneComponentsMSFT, and, scene components are located by using xrLocateSceneComponentsMSFT. An application can also pass parameters to specify how the scan of the user environment should be computed. In an embodiment, the application can pass one or more bounding volumes that are used to determine which scene components to include in the resulting scene: Scene components entirely outside these volumes should be culled. The space parameter provides a reference coordinate system in which the coordinates of the bounding volumes and the scanned objects will be expressed. The time parameter gives a time at which the bounds volume will be evaluated within space.

In this example extension, an application can request that the system begin capturing information about what is in the environment around the user. The XrSceneCaptureRequestInfoFB structure is used by an application to instruct the system what to look for during a scene capture. If the request parameter is NULL, then the runtime must conduct a default scene capture. The request parameter is a string that the application can use to specify what type of scene capture has to be initiated by the runtime. The content of buffer pointed to by the request parameter is runtime-specific.

Thanks to the XR Runtime module, an XR UE can request the scan of the real environment. APIs exist for a presentation engine module to configure and request representation of the user environment, but the configuration data used with this API is specific to an engine or to an XR application. There is a lack for a generic solution. A content creator may want to insert in the description of its 3D virtual scene, some indications on how the scan should be performed, what elements of the 3D scene is needed (walls, floor, horizontal or vertical plane), what quality is needed for the scan object (simplified mesh, bounding boxes, textures, etc....), in which spatial extent the real world must be analyzed and/or when should be performed update of the scan (once, timed or event based...), for example.

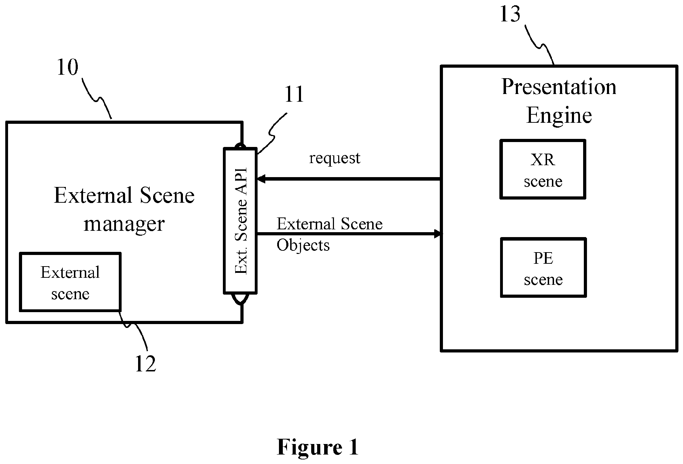

**Figure 1** illustrates a generic module 10 to manage a representation of the real part of an XR scene according to the present principles. This module and associated API 11 handle an external scene graph 12 that is synchronized with the virtual scene managed by a presentation engine 13. According to the present principles, semantics is provided to include information related to scene understanding in a virtual scene description file and to describe the representation of a real scene. Generic API 11 exposes to presentation engine 13 a set of functions that comprises initializing and configuring the external scene manager module (that is creation of a session between the two modules, setting of parameters needed by the external module to handle its scene); starting or stopping the external module processing; notifying the external module that an update occurred in the scene managed by the presentation engine; and registering callbacks for the external module to request status from the PE module or to notify that updates occurred in the external scene.

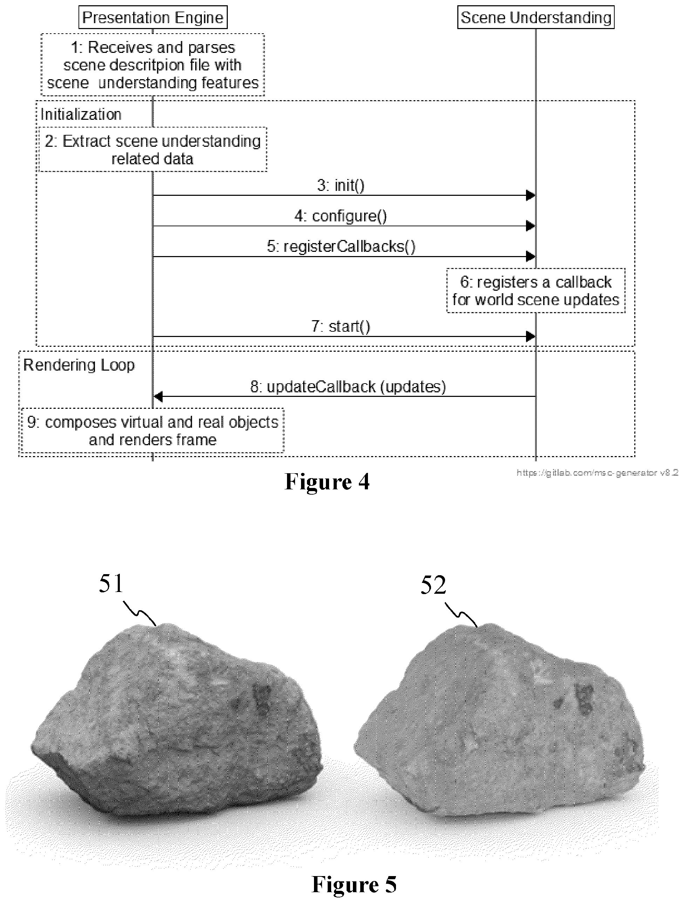

**Figure 5** shows a capture 51 of a stone and it delighted version 52. The texture of captured stone 51 is kept while the effect of the environment's lighting is removed in delighted image 52. So, there is a need of a format for scene descriptions that allows to control the lighting of the scan and its quality. For a textured mesh like stone 51 to be realistically integrated in the virtual world, there is a need to specify some processing model and semantics, to make this available.

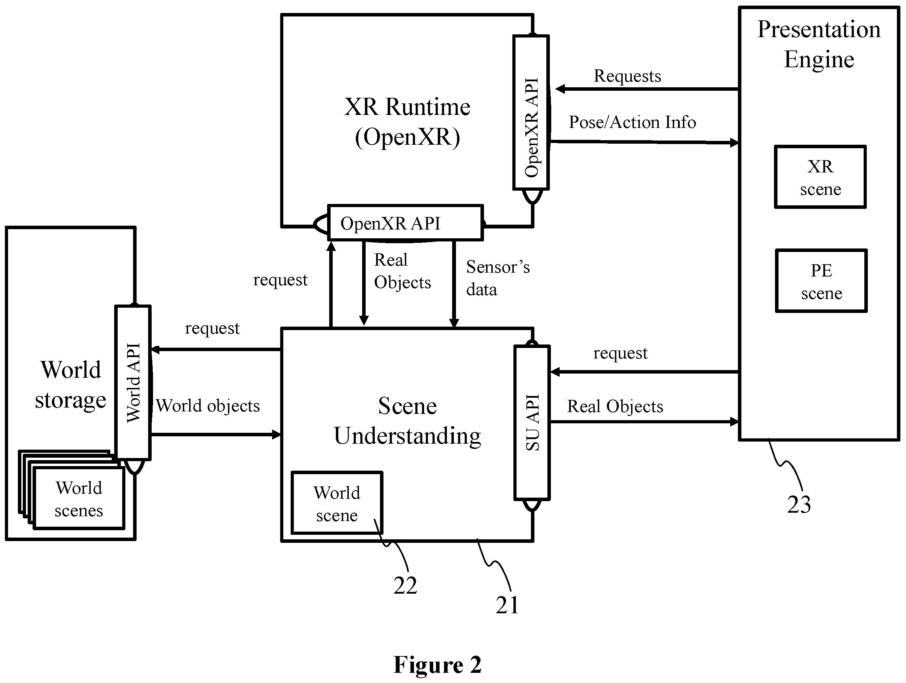

**Figure 2** depicts an instantiation 21 of generic module 10 of Figure 1 as a scene understanding module that maintains a representation 22 of the user environment according to the present principles. In this example embodiment, this module is the unique entry point for a presentation engine module 23 to get the knowledge of the real scene around the user and to integrate a virtual scene into this real scene. Scene understanding (SU) module 21 creates and maintains a representation 22 of the real environment (for example, scene graph of the real-world scene) around the user. It gets updates of this scene graph by scanning in real-time the user environment (using the XR Runtime API) or by retrieving pre-scanned data from a world storage module. Presentation engine (PE) 23 may control the configuration and the starting of scene graph 22 creation and update. A generic API is proposed herein that provides methods for the PE. The scan of the user environment is linked to anchors and/or trackables that allow a link between a virtual scene and a place in the real environment where to integrate the virtual scene or elements of the virtual scene. Those anchors and trackables may be described in a virtual scene description file (e.g. glTF MPEG_anchor extension). The PE can request the detection and the tracking of the trackables to the XR Runtime module. The detection and the tracking of a trackable results to the definition of an XR space in which the poses of one or more anchors are expressed. Another XR space is defined for each anchor, where the pose of virtual elements can be expressed. Both PE and SU modules may have access to the list of existing XR spaces and use them to spatially synchronize their scene graph. The Id of a trackable XR space (xrSpaceId) is given as input to the API methods to handle a scan of real objects around each trackable. Each xrSpaceId gives a mapping between a trackable described in the XR scene and a set of elements of the world scene. Each object of the world scene, returned by the SU module, comprises a set of attributes including a referenceId to identify it in the world scene as a unique object and a xrSpaceId to identify the XR space in which it is located. It may also comprise visual attributes like pose, mesh, material and texture description, lighting attributes for an object representing a real light source, physical attributes to handle interaction with other real or virtual objects (occlusion, collision...). Additional parameters may include semantics information to specify the nature of the object (e.g. "wall", "table", "chair", "light", "sound", ...).

The following table provides a possible API according to the present principles:

| Method | Description | |
|---|---|---|
| init () | Initialization of the SU module and creation of a session between the PE and the SU module. | |

| **Method** | **Description** | |
|---|---|---|
| configure () | Configures the way the real scene must be scanned. For each trackable XR space, a set of input parameters is given: | |
| | [ | |
| | { | |
| | | xrSpaceId |
| | | scanOccurence |
| | | array of object semantics |
| | array of compute options (scan details, mesh types, delight options...) | |
| | array of scan volumes (sphere, box...): determine the volumes where scanned objects must be provided. Real scan objects that intersect one or more of the bounding volumes should be used, and all other objects ignored. | |
| | } | |
| | ] | |
| | Scan volumes may overlap between 2 xrSpaceId. In that case, real object contained in the overlap section may be provided twice, with two different referenceId, or only once for one of the xrSpaceId. | |
| start () | Starts or stops the creation and update of the real scenes. The input parameter is a set of xrSpaceId to specify the trackables around which the scan of real objects must be performed. | |
| stop () | | |
| | [ | |
| | { | |
| | | xrSpaceId}] |
| | } | |
| | ] | |
| registerCallbacks () | Provides callback functions to the scene understanding module to allow it to send updates or status of the world scene. An array of callbacks is given as input. | |
| | [ | |
| | { | |
| | type (goal of the callback, e.g. an enumeration with the following possible values: UPDATES, STATUS...), | |
| | | callback () (a pointer to a function) |
| | } | |
| | ] | |
| | The parameters of an UPDATES callback are an array of objects that include: | |
| | | • An operation, ADD, UPDATE or REMOVE |
| | | • A timestamp value |
| | | • For ADD, the referenceId and xrSpaceId of the new object as well as a dictionary of attributes and their initialization values. |
| | | • For UPDATE, the referenceId and xrSpaceId of the object as well as a dictionary of attributes and their new values. |
| | | • For REMOVE, the referenceId of the object to remove. |
| | The SU module may automatically call this UPDATE callback at the same occurrence of the scan process or it may call it when significative changes has occurred. | |
| | The parameters of a STATUS callback are an array of objects that include: | |
| | | • xrSpaceId |
| | | • ReferenceId (if absent, all the scene related to xrSpaceId is considered) |
| | | • status (the status of the object referenced by ReferenceId, e.g. ONGOING, COMPLETE, NOT_VALID, PARTIAL...) |
| | The SU module may send this STATUS callback multiple time after a scan process has been started, each time this status changes. | |
| getSceneComponents () | Requests element(s) of the world scene. The following set of optional input parameters give filtering criteria for this request: | |
| | { | |
| | ***time*:** requests the world scene at a given historical time or predicted time. This parameter may be used with an XR device able to store past versions of the world scene or able to predict it in the future. A time limit in both directions may be specified, depending on the capacity of the XR UE (e.g. a few second in the past and a few tens of ms in the future). | |
| | xrSpaceId: request elements related to a given XR space. | |
| | Array of **scan volumes**: request elements contained in one of the specified volumes. | |
| | Array of ***object semantics***: request elements with one of the given semantics. | |
| | Array of object ***referenceIds*:** request elements with one of the given ids. | |
| | Array of **compute options**(delight options, ...) | |
| | } | |
| | Returns a status of the world scene (same possible values as in the STATUS callback) and if OK (status = COMPLETE), returns the graph of the world scene or of some word scene elements, each returned element comes with a set of attributes: | |
| | | • referenceId |
| | | • visual, lighting, and physical attributes |
| | | • semantic attributes |

In the configure () method, the scanOccurence parameter is a value specifying when the scan of real objects must be updated after a first call to the start () function. In a variant, the scan process may start automatically after a call to the configure () method. An extra "autostart" parameters may be added to this method to explicitly specify this automatic starting mode. the scanOccurence parameter may have different values: ONCE: the scan is performed only once, for instance in case of a static real scene; N_FRAME: the scan is performed periodically, every N rendering frames, N depending on the dynamism of the real scene; AUTO: the scan occurrence is managed by the SU module. The SU module may perform a light pre-analysis to detect significant moves in the real world and start a new scan from the beginning. This pre-analysis may be performed from raw images data, like RGB images from a camera or depth images from a depth sensor. Several of these possible values may be combined to address different scenarios (e.g. ONCE AND AUTO). An object semantics may be any label representing a type of object: "wall", "floor", "table", "chair", "light", "sound", "freespace" ... Compute options and scan volumes may be similar to the one specified in the Microsoft OpenXR scene understanding extension, for example.

According to the present principles, a parameter of the configure() method, for instance named delight options is present in the compute options. It comprises several parameters: a need_delight flag a quality_level enumeration, a texture_ids array , and an array of enumeration texture_type (at least). In another embodiment, these parameters are set as parameters of the getSceneComponents() method as an array of compute options that comprises the same parameters. In another embodiment, these parameters are present in the two functions configure() and getSceneComponents().

An example of the delight options parameters details is shown in the table below.

| **Parameter name** | | **Type** | **Cardinality** |
|---|---|---|---|
| need_delight | | boolean | 1..1 |
| If(need_delight) { | | | |
| | quality_level | enumeration | 1..1 |
| | texture_ids | array | 0..n |
| | texture_type | enumeration | 0..n |
| } | | | |

Semantics are defined in a scene description file. This semantic specifies if and how the user real environment should be integrated into the scene. Semantics already exist in scene description language, e.g. MPEG-SD MPEG_anchor extension that specify an element of the real world where virtual elements should be positioned. The semantics proposed herein may be added as new parameters in *MPEG_anchor* extension, or a new *MPEG_node_real* (or any other name) extension may be specified, beside the *MPEG_anchor* extension. These extensions are related to the glTF format, but we may add these semantics in extensions of any other description format (USD, FBX...). In the following tables, the value in the column **Usage** indicates if the parameter is optional (O) or mandatory (M) according to the present principles.

| **Parameter name** | | **Type** | **Usage** | **Description** |
|---|---|---|---|---|
| useReal | | Boolean | O | If true, the scan of the real word is needed for the integration of the virtual objects: |
| | | | | • As simplified meshes to be used for physics simulation (collision, occlusion...) |
| | | | | • As full mesh/texture to handle relighting or for a digital twin of an object that is not present in the real scene. |

| If (useReal) | | | | |
|---|---|---|---|---|
| | scanOptions | Array | O | Array of options (enumeration) for the scan computation: possible values can be the one specified |
| | | | | in the Microsoft OpenXR scene understanding extension. |
| | scanDetails | Object | | Specifies the required level of detail for the mesh (number/type of primitives/m3) and for the texture of the visual mesh. |
| scanOccurence | | Enum | | Specifies when the scan of real objects must be updated. It may have the same format as the scanOccurence parameter. |
| | scan Volumes | Array | O | Array of bounding volumes that determine the spaces where scanned objects must be used. Real scan objects that intersect one or more of the bounding volumes should be used, and all other objects ignored. |
| | real Semantic | Array | O | Semantic descriptions of nodes that are needed ("table", "room", "chair", "wall", "light", "freespace" ...) |

Possible values for a scanOptions item may be:

| **Enumeration value** | **Description** |
|---|---|
| PLANE | Request plane data for scanned objects |
| PLANAR_MESH | Request planar meshes for scanned objects |
| VISUAL_MESH | Request 3D visualization meshes for scanned objects |
| COLLIDER_MESH | Request 3D collider meshes for scanned objects |
| FREE_VOLUME | Request to get the available space around a trackable |
| POINT_CLOUD | Request a points cloud representation |
| BOUNDING_BOX | Request a simplified collider mesh |
| TEXTURED_MESH | Request mesh with a texture |

Semantics of a scanDetail object may be:

| **Parameter name** | **Type** | **Usage** | **Description** | |
|---|---|---|---|---|
| primitivesNumber | number | O | Gives the quantity of geometric primitives per m³ | |
| primitiveType | Enum | O | Gives the types of primitives | |
| TextureOptions | Array | O | Array of options (e.g. enumeration) for the texturing details. Possible values may be: | |
| | | | | • LOW_RES, HIGH_RES for the resolution of the texture, or the exact resolution (e.g. 1024x768) |
| | | | | • LOW_LIGHT, HIGH_LIGHT for the level of lightning of the texture |
| | | | | • RGB, RGBA... for the texture format. |

Possible values for a primitiveType may be:

| **Enumeration value** | **Description** |
|---|---|
| QUAD | Mesh of 3D Model is represented by an array of Quad |
| TRIANGLE | Mesh of 3D Model is represented by an array of TRIANGLE |
| POINT CLOUD | 3D Model is represented by a point cloud |
| GAUSSIAN_SPLAT | 3D Model is represented by an array of gaussian |

The scanOccurence parameter is a value specifying when the scan of real objects must be updated. It may have the same format as the one in the configure () method of the API. Semantics for a scan Volumes object may be defined as follows. 3D coordinates are expressed in the XR space related to trackable associated to the anchor.

| **Parameter name** | | | **Type** | **Usage** | **Description** |
|---|---|---|---|---|---|
| | type | | Enum | M | SPHERE, BOX, FRUSTUM |
| | If (type == SPHERE) | | | | |
| | | Center | array | M | 3D coordinate of the center of the sphere |
| | | Radius | number | M | Radius of the sphere in meters. |
| | If (type == BOX) | | | | |
| | | pose | matrix | M | 4*4 matrix representing the center position and orientation of the box |

| | | | | | |
|---|---|---|---|---|---|
| | | extents | array | O | Edge-to-edge length of the box along each dimension. |
| | If (type == FRUSTUM) | | | | |
| | | pose | matrix | M | 4*4 matrix representing the position and orientation of the tip of the frustum |
| | | fov | Vec4 | M | Angles of the four sides of the frustum |
| | | far | number | M | Positive distance of the far plane or the frustum |
| | | near | number | M | Positive distance of the near plane or the frustum |

Such a scene description format is proposed for the scan of the real scene provided by the "scene understanding" module. This format is related to the real-world objects returned by the getSceneComponents () method and the UPDATE callbacks of the API. It may be the description of the full space around the user, or it can be an update, with only the differences from a previous provision. The useReal parameter, when set to true, enables scan options that can bring a VISUAL_MESH into the virtual scene, to help integration of virtual object in the real world.

The format defined hereafter is an example based on the Khronos glTF language, extended with MPEG-SD extensions, but similar features can be adapted to other languages, for instance the one used for the internal representation of the scene (PE scene). The scan of one or more real objects may come as a scene graph, for example glTF scene graph. Each root node of this graph is associated/mapped with a virtual node of the glTF scene of the PE module that features an MPEG_anchor extension, i.e. the one who shares the same XR space. The transform matrix of a "real" node should be expressed in the trackable XR space (xrSpaceId). A "real" node may have a mesh and a texture generated and provided by the SU module. Extra parameters may be added to a "real" node inside a new MPEG_node_real extension (or any other name).

| **Parameter name** | **Type** | **Usage** | **Description** |
|---|---|---|---|
| referenceId | String | | Unique id of a real node, set by the SU module |
| xrSpaceId | String | O | XR space in which transform information are expressed. Only needed for a root node of the scene graph. |
| realSemantic | String | O | Semantic description of the node ("table", "room", "chair" ...) |
| scanType | enum | M | Indicates the kind of mesh associated to the node: |
| | | | • FULL: a complete mesh, material and texture is provided |
| | | | • BOUNDING: a simplified mesh is provided that can be used for physics simulation (collision, occlusion... ). |

**Figure 4** depicts an example implementation of a sequence diagram illustrating the present principles. It shows the exchanges between the PE module and the SU module during a 3D scene processing, involving real world elements. In this example, the SU module automatically sends World Scene updates using the registered callback.

The PE starts an XR application and receives an initial scene description file (step 1), describing the virtual elements to integrate in the real world. During an initialization phase, the PE parses the scene description file and retrieves the information related to the scene understanding processing (step 2). If the scan of real-world elements is needed to process the scene it uses the SU API to initialize and configure the SU module (steps 3, 4 and 5). The SU module registers the PE callbacks (step 6) that will be used to send real-world updates to the PE. The PE starts the scene understanding processing (step 7), but if the autostart parameter is set to True in the configure () method. During the rendering loop (i.e. the processing phase where the PE, at a given rate, process the 3D scene and create visual/audio frame to be presented to the user). If the PE receives real scene updates from the SU module (step 8), it parses the update data following the format proposed according to the present principles, and extracts real objects representations. If no update is sent by the SU module, the PE uses real objects representations previously received. The PE composes a mixed scene, made of real and virtual objects, and renders new frames (step 9).

The need_delight flag enables the global functionality of delighting in the scene understanding module. When set as input parameter in the configure() method, it may be used to inform the scene understanding module that there is delighting processus to be performed.

Different levels of delighting quality may be considered to allow the content creator to have more control on the quality of the delighting. It may also have impact on the computation time if it is performed at runtime, since it can be a long processing time. The quality enumeration may comprise parameters associated with the relative quality of the delighting result, such as DELIGHT_QUALITY_LOW, DELIGHT_QUALITY_MEDIUM, DELIGHT_QUALITY_HIGH. In another embodiment, the quality enumeration may comprise parameters associated with the relative speed of the delighting process, such as DELIGHT_SPEED_FAST, DELIGHT_SPEED_MEDIUM, DELIGHTSPEEDSLOW. In another embodiment, the quality enumeration may contain parameters associated with a relative priority, such as DELIGHT_PRIORITY_LOW, DELIGHT PRIORITY MEDIUM, DELIGHT_PRIORITY_HIGH. In another embodiment, the quality may be a bitmask and may contain a combination of the previous embodiments, by combining enumeration terms, such as (DELIGHT_QUALITY_FAST | DELIGHT_QUALITY_LOW), (DELIGHT_QUALITY_MEDIUM, DELIGHT PRIORITY LOW), or (DELIGHT_SPEED_FAST | DELIGHT_QUALITY_HIGH | DELIGHT PRIORITY HIGH).

The texture_ids array and texture_type enumeration array may be used when some textures of a scan are already available to be given to the scene understanding module. Those two arrays are of the same size. The scene understanding module maps each element of the texture_ids with the associated texture_type, and transmits them to the delighting implementation. texture_ids is an array in which each element is an identifier to a texture. As an example, one element may contain raw pointer data, or an id which corresponds to a texture data. The texture_type may comprise (ALBEDO, BENT_NORMAL_MAP, NORMAL_MAP). In another embodiment, each element of the texture_ids array comprises a string that describes the path to the texture in a scene description file, such as "textures/source/0". In another embodiment, each element of the texture_ids array may contain an index to the images array of a scene description file.

Depending on the quality_level and the texture_ids parameters, results may vary. As an example, if the content creator wants a fast delighting, and provides all the textures required by the implementation, a good delighting quality may be achieved in a short processing time.

In the example implementation illustrated in Figure 4, the presentation engine parses the scene description file and retrieves the information related to the scene understanding processing. According to the present principles, that information includes parameters dedicated to the delighting process. Theses parameters belong to a group of parameters that comprises need_delight, quality_level, texture_ids and texture_type as described herein. This may be performed at step 4 and/or 8. If the scan of real-world element is required, the Presentation Engine uses the scene understanding information to initialize and configure the scene understanding module. If the need_delight parameter is present and set to true (if absent it is considered as set to false), the quality_level, the texture_ids array and the texture_type array are read from the scene description file and passed to the scene understanding module by the presentation engine. If the need_delight parameter is not present, the parameters are not read. Then, the Presentation Engine may start the scene understanding processing. It is automatic when the autostart parameter has been set to true in the configure() method.

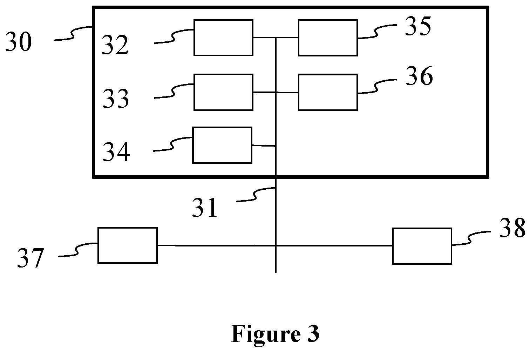

**Figure 3** shows an example architecture of a device 30 which may be configured to implement methods according to embodiments of the present principles. The device is linked with other devices via their bus 31 and/or via I/O interface 36.

Device 30 comprises following elements that are linked together by a data and address bus 31:D
- a processor 32 (or CPU), which is, for example, a DSP (or Digital Signal Processor);
- a ROM (or Read Only Memory) 33;
- a RAM (or Random Access Memory) 34;
- a storage interface 35;
- an I/O interface 36 for reception of data to transmit, from an application; and
- a power supply (not represented in Figure 2), e.g. a battery.

In accordance with an example, the power supply is external to the device. In each of mentioned memory, the word « register » used in the specification may correspond to area of small capacity (some bits) or to very large area (e.g. a whole program or large amount of received or decoded data). The ROM 33 comprises at least a program and parameters. The ROM 33 may store algorithms and instructions to perform techniques in accordance with present principles. When switched on, the CPU 32 uploads the program in the RAM and executes the corresponding instructions.

The RAM 34 comprises, in a register, the program executed by the CPU 32 and uploaded after switch-on of the device 30, input data in a register, intermediate data in different states of the method in a register, and other variables used for the execution of the method in a register.

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Device 30 is linked, for example via bus 31 to a set of sensors 37 and to a set of rendering devices 38. Sensors 37 may be, for example, cameras, microphones, temperature sensors, Inertial Measurement Units, GPS, hygrometry sensors, IR or UV light sensors or wind sensors. Rendering devices 38 may be, for example, displays, speakers, vibrators, heat, fan, etc.

In accordance with examples, the device 30 is configured to implement a method according to the present principles of managing a representation of the real environment of a user of an XR application comprising delighted objects, and belongs to a set comprising:
- a mobile device;
- a communication device;
- a game device;
- a tablet (or tablet computer);
- a laptop;
- a still picture camera;
- a video camera.

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, Smartphones, tablets, computers, mobile phones, portable/personal digital assistants ("PDAs"), and other devices that facilitate communication of information between end-users.

Implementations of the various processes and features described herein may be embodied in a variety of different equipment or applications, particularly, for example, equipment or applications associated with data encoding, data decoding, view generation, texture processing, and other processing of images and related texture information and/or depth information. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. A method for managing a scene understanding representation of a real environment of an extended reality scene comprising delighted objects, the method comprising:
- obtaining a scene description, the scene description comprising first data describing a virtual part of the extended reality scene and second data describing parameters to integrate the real environment and the virtual part of the extended reality scene wherein the second data comprises delighting parameters;
- initializing a scene understanding representation with the second data;
- relighting the delighted objects in the first data according to the delighting parameters; and
- rendering of the first data.

2. The method of claim 1, wherein the delighting parameters comprise a quality level, an array of texture identifiers, and an array of texture types.

3. The method of claim 1 or 2, wherein, for each object of the extended reality scene, the second data comprise information indicating whether the delighting parameters are present.

4. The method of one of claims 1 to 3, wherein the delighting parameters are associated with a configuration function and/or with callback functions of the second data.

5. The method of one of claims 2 to 4, wherein the quality level is a parameter indicating a low, medium or high level of quality of delighting, a slow, medium or fast level of processing speed, or a low, medium or high level of processing priority.

6. The method of one of claims 2 to 5, wherein the quality level is a parameter indicating a combination of a level of quality of delighting, a level of processing speed and/or a level of processing priority.

7. The method of one of claims 2 to 6, wherein a texture type belongs to a group comprising albedo, normal map and bent normal map.

8. A renderer for managing a scene understanding representation of a real environment of an extended reality scene comprising delighted objects, the renderer comprising a memory associated with a processor configured for:
- obtaining a scene description, the scene description comprising first data describing a virtual part of the extended reality scene and second data describing parameters to integrate the real environment and the virtual part of the extended reality scene wherein the second data comprises delighting parameters;
- initializing a scene understanding representation with the second data;
- relighting the delighted objects in the first data according to the delighting parameters; and
- rendering of the first data.

9. The renderer of claim 8, wherein the delighting parameters comprise a quality level, an array of texture identifiers, and an array of texture types.

10. The renderer of claim 8 or 9, wherein, for each object of the extended reality scene, the second data comprise information indicating whether the delighting parameters are present.

11. The renderer of one of claims 8 to 10, wherein the delighting parameters are associated with a configuration function and/or with callback functions of the second data.

12. The renderer of one of claims 9 to 11, wherein the quality level is a parameter indicating a low, medium or high level of quality of delighting, a slow, medium or fast level of processing speed, or a low, medium or high level of processing priority.

13. The renderer of one of claims 9 to 12, wherein the quality level is a parameter indicating a combination of a level of quality of delighting, a level of processing speed and/or a level of processing priority.

14. The renderer of one of claims 9 to 13, wherein a texture type belongs to a group comprising albedo, normal map and bent normal map.
